# EUROPÄISCHE PATENTSCHRIFT

(11) **EP 2 357 281 B1**
(45) Veröffentlichungstag und Bekanntmachung des Hinweises auf die Patenterteilung: **24.01.2018**
(21) Anmeldenummer: 10015791.6
(22) Anmeldetag: 17.12.2010
(51) Int. Cl.: E01C 19/23, E01C 19/28, E01C 19/29, B60B 27/00

(54) **Kantenrichtvorrichtung**
Edge alignment device
Dispositif de direction de bords

(30) Priorität: 17.02.2010 DE 102010008308
(43) Veröffentlichungstag der Anmeldung: 17.08.2011
(73) Patentinhaber: BOMAG GmbH, 56154 Boppard (DE)
(72) Erfinder: Stein, Diana, 56637 Plaidt (DE); Bender, Matthias, 55494 Rheinböllen (DE)
(74) Vertreter: Lang, Friedrich

(56) Entgegenhaltungen:
- DE-A1- 2 927 883
- DE-A1- 3 020 796
- DE-U- 1 720 835
- DE-U1- 8 710 179
- GB-A- 750 743

## Beschreibung

Vorliegend Erfindung betrifft eine Kantenrichtvorrichtung, insbesondere für eine Vibrationswalze zum Bearbeiten von bituminösen Fahrbahnen, mit einem Richtwerkzeug, das auf einer frei rotierbaren Lagernabe mittels eines Befestigungsmittels in einem Presssitz befestigbar ist.

Das Aufbringen von Straßenbelägen und insbesondere das Verlegen bituminöser Fahrbahnbeläge erfolgt gemäß dem Stand der Technik meist maschinell, wobei nach dem meist streifenweise Einstreuen neuer Fahrbahnbeläge mit bituminösem Rohmaterial eine Verdichtung durch entsprechende Verdichtungsvorrichtungen und insbesondere Vibrationswalzen erfolgt. Beispiele für Verdichtungsvorrichtungen sind aus GB 750 743 A und DE 87 10 179 U1 bekannt. Je nach verwendeten Maschinen, erfolgt das Einstreuen und Verdichten in getrennten oder aber, bei der Verwendung maschineller Verfahren, in einem einzigen Arbeitsgang. Grundsätzlich ist hier jedoch problematisch, dass in den Randbereichen der Verdichtungsvorrichtung unregelmäßige Begrenzungskanten des Belages entstehen. Diese unregelmäßigen Begrenzungskanten stellen beim Anschluss weiterer Fahrbahnstreifen ein Problem dar. Auch an randseitig verlaufenden Fahrbahnstreifen besteht der Bedarf, diesen unregelmäßigen Begrenzungsrand sauber auszurichten, um einen gleichmäßigen Verlauf der neu gewalzten Fahrbahnoberfläche zu gewährleisten.

Erfolgte das Beschneiden und Ausrichten der Ränder früher häufig von Hand mittels einer Axt oder ähnlichen Werkzeugen, gibt es inzwischen aus dem Stand der Technik Maschinen, die diese aufwendige Richtarbeit maschinell bewerkstelligen.

So beschreibt die DE 1720835 U eine Rollenschneidvorrichtung für bituminöse Beläge, bei der ein ohne Antrieb auf einer Rotationsnarbe gelagertes Richt- und insbesondere Schneidwerkzeug an einem Zugfahrzeug befestigbar ist. Das Richtwerkzeug kann über einen Schwenkarm von einer Ruheposition in eine Richtposition verschwenkt werden, in der es in die unregelmäßigen Randbereiche eingreift, und, je nach montiertem Werkzeug, diese geraderichtet, schneidet, komprimiert, etc.

Als Richtwerkzeuge finden bei obigen Kantenrichtvorrichtungen unterschiedliche andere Rollen, Kantenandrückrollen und Schneidscheiben ihre Anwendung, die das bedarfsgerechte Richten der unregelmäßigen Begrenzungskanten und angrenzenden Oberflächen erlauben. Aufgrund der unterschiedlichen Richtwerkzeuge besteht daher ein Bedarf, ein Befestigungsmittel bzw. eine Kantenrichtvorrichtung anzubieten, die ein möglichst einfaches und sicheres Befestigen, Lösen und somit Auswechseln von Richtwerkzeugen ermöglicht.

Gelöst wird diese Aufgabenstellung durch eine Kantenrichtvorrichtung gemäß Patentanspruch 1 und ein Befestigungsmittel für ein Richtwerkzeug einer Kantenrichtvorrichtung gemäß Patentanspruch 14.

Insbesondere wird diese Aufgabe durch eine Kantenvorrichtung, insbesondere für eine Vibrationswalze zum Bearbeiten von bituminösen Fahrbahnen gelöst, mit einem Richtwerkzeug, das auf einer frei rotierbaren Lagernabe mittels eines Befestigungsmittels in einem Presssitz befestigbar ist, wobei das Befestigungsmittel einen Fixierkopf mit drei Fixierelementen aufweist, der derart mit der Lagernabe in Wirkverbindung bringbar ist, dass die drei Fixierelemente das Richtwerkzeug in den Presssitz drängen. Ein wesentlicher Punkt der erfindungsgemäßen Kantenrichtvorrichtung liegt also darin, dass der Fixierkopf des Befestigungsmittels drei Fixierelemente aufweist, die unter Krafteinwirkung am Befestigungswerkzeug anstehen. Die drei Fixierelemente definieren dadurch eine Dreipunktlagerung, die einen sicheren Sitz des Befestigungswerkzeuges auf der Lagernabe garantiert.

Von grundlegender Bedeutung ist hierbei, dass es sich bei der Lagernabe um eine frei rotierbare Lagernabe, also ohne eigenen Antrieb, handelt. Vielmehr wird die Kantenrichtvorrichtung bei der Vibrationswalze mit der zu bearbeitenden Kante in Wirkverbindung gebracht und beim Fortbewegen der Vibrationswalze oder eines entsprechenden Zugfahrzeuges mitgezogen, wobei sich durch den Kraftschluss zwischen Richtwerkzeug und Fahrbahnbelag bzw. Fahrbahnkante das Richtwerkzeug und die rotierbare Lagernabe drehen. Insofern sind also auch nur geringe Umdrehungsgeschwindigkeiten zu erwarten. Das Richtwerkzeug wird also nicht angetrieben, es rollt vielmehr beim Arbeitsvorgang ab. Angetrieben ist die Gesamtmaschine, also die Vibrationswalze oder ein Zugfahrzeug. Aufgrund der meist sehr schweren Richtwerkzeuge und der langsamen Umdrehungsgeschwindigkeiten, die auf die meist sehr langsame Vorwärtsbewegung des Zugfahrzeuges zurückzuführen sind, erreicht man bei der erfindungsgemäßen Kantenrichtvorrichtung eine Befestigung des Richtwerkzeuges, das einfach an der Lagernabe fixierbar und wieder von dieser lösbar ist.

Vorzugsweise sind die Fixierelemente sternförmig zu einem Rotationsmittelpunkt des Richtwerkzeuges im Befestigungszustand angeordnet. Unter sternförmig werden hier vorzugsweise solche Orientierungen verstanden, bei denen die Winkel zwischen Verbindungsgeraden zwischen den einzelnen Fixierelementen und dem Rotationsmittelpunkt im Wesentlichen identisch sind. Dies garantiert eine über die Fläche des Richtwerkzeuges gleichmäßige Verteilung der Fixierelemente und somit eine zuverlässige Fixierung an der Lagernabe.

Erfindungsgemäß weisen die Fixierelemente jeweils eine Punktlagerfläche auf, die im Befestigungszustand am Richtwerkzeug ansteht. Je nach Größe des Richtwerkzeuges kann hier die Größe der Punktlagerfläche variieren. Auf jeden Fall bildet sich aber durch die Ausbildung der Punktlagerflächen an den drei Fixierelementen eine Fixierung, deren Dreipunktlagerung eine sichere Festlegung an der Lagernabe garantiert.

Die Ausbildung der Punktlagerflächen kann hier kongruent zu den Fixierelementen erfolgen, sodass eine Oberfläche eines jeden Fixierelementes eine Punktlagerfläche bildet. Es ist aber auch möglich, an einer Oberfläche eines jeden Fixierelementes spezielle Bereiche auszubilden, die als Punktlagerflächen fungieren. Hierzu sind beispielsweise entsprechende Vorsprünge an den Fixierelementen ausbildbar.

Grundsätzlich ist es so beispielsweise möglich, einen Fixierkopf auszubilden, der in der Draufsicht, also in einer Achse parallel zur Rotationsachse der Lagernabe eine Sternform mit drei "Sternzacken" aufweist.

Vorzugsweise sind die drei Punktlagerflächen radial beabstandet zu einem Rotationsmittelpunkt des Richtwerkzeuges im Befestigungszustand angeordnet. Je größer hier der Abstand zum Rotationsmittelpunkt des Richtwerkzeuges und/oder zur Lagernabe ist, desto größer ist die resultierende Befestigungskraft, die ein jedes Fixierelement auf das Richtwerkzeug einträgt.

Vorzugsweise sind die obigen drei Radialabstände der Punktlagerflächen zum Rotationsmittelpunkt M identisch ausgebildet. Das bedeutet also, dass die Punktlagerflächen bzw. die resultierenden Krafteinleitungspunkte der Punktlagerflächen auf einer Kreislinie zum Rotationsmittelpunkt M angeordnet sind. Dies stellt eine gleichmäßige Befestigungskraft sicher.

Vorzugsweise verkleinern sich die Punktlagerflächen mit zunehmendem Abstand zum Rotationsmittelpunkt M des Richtwerkzeuges im Befestigungszustand. Eine solche Form kann beispielsweise die zuvor beschriebene Sternform des Fixierkopfes bedingen, bei der sich aufgrund der Sternzacken die Punktlagerflächen verkleinern, je weiter sie vom Rotationsmittelpunkt M entfernt sind. Dies hat sich insbesondere für den Lösevorgang des Befestigungsmittels als besonders vorteilhaft herausgestellt. Darüber hinaus erlaubt eine solche Ausbildung die sehr preiswerte Herstellung des erfindungsgemäßen Befestigungsmittels.

Vorzugsweise weist der Fixierkopf einen Zentralbolzen auf, der unter Durchdringung des Richtwerkzeuges an der Lagernabe befestigbar ist. Die Folge eines solchen Zentralbolzens ist die Ausbildung des Befestigungsmittels als Zentralverschluss, der die einfache und schnelle Fixierung des Richtwerkzeuges an der Lagernabe garantiert.

Vorzugsweise ist dazu der Zentralbolzen in die Lagernabe einschraubbar oder dergleichen befestigbar, wobei vorzugsweise ein koaxial zur Hauptachse der Lagernabe gerichtetes Einschrauben oder Befestigen erfolgen kann.

Vorzugsweise weist die Lagernabe ein Lagerelement zur radialen Zentrierung des Richtwerkzeuges im Befestigungszustand auf. Ein solches Lagerelement kann beispielsweise ein Lagerabsatz sein, dessen Lagervorsprung in eine entsprechende Lagerausnehmung am Richtwerkzeug eingreift und so eine radiale Zentrierung vornimmt. Je nach Bedarf kann eine solche radiale Zentrierung koaxial zur Rotationsachse aber auch dazu exzentrisch erfolgen, wenn beispielsweise eine exzentrische Rotation gewünscht ist. In Verbindung mit dem erfindungsgemäßen Befestigungsmittel lässt sich mittels des Lagerelementes eine einfache Fixierung des Richtwerkzeuges auf der Lagernabe sicherstellen.

Vorzugsweise weist das Befestigungsmittel wenigstens ein Löseelement auf, um auf das Befestigungsmittel eine Lösekraft aufzubringen, über die die Befestigung des Richtwerkzeuges im Presssitz lösbar ist. Beispielsweise kann hier eine entsprechende Werkzeugaufnahme am Befestigungsmittel und insbesondere an wenigstens einem der Fixierelemente vorgesehen werden.

Vorzugsweise weist das Löseelement eine Schlagfläche auf, auf die die Lösekraft mittels eines Schlagwerkzeuges aufbringbar ist. Bei einem eingeschraubten Befestigungsmittel kann dies beispielsweise eine Fläche sein, auf die mit einem Hammer geschlagen werden kann, um das Befestigungsmittel abzuschrauben und so den Presssitz des Richtwerkzeuges zu lösen. Gerade auf Straßenbaustellen ist eine solche Ausbildung von besonderem Vorteil, da hier nahezu jedes Schlagwerkzeug zum Lösen der Befestigung des Richtwerkzeuges verwendet werden kann.

Vorzugsweise ist das Löseelement hierzu am Fixierelement angeordnet. Dies erlaubt eine sehr preiswerte Ausbildung. Darüber hinaus ist es so möglich, das Löseelement in einem möglichst großen Abstand zum Rotationsmittelpunkt anzuordnen, um die resultierende Lösekraft zu steigern.

Vorzugsweise ist das Löseelement über ein Hebelelement am Befestigungsmittel angeordnet und vom Rotationsmittelpunkt M der Lagernabe weiter beabstandet als die Fixierelemente. Ein solches Hebelelement kann als eigenes Bauteil am Befestigungsmittel vorgesehen sein, es kann aber auch als Teil eines oder mehrerer Fixierelemente ausgebildet sein und eine entsprechende Lösewerkzeugeingriffstelle, also beispielsweise auch eine Schlagfläche, aufweisen. Durch den grö-ßeren Hebelarm des Löseelementes im Vergleich zu dem Hebelarm der Fixierelemente (immer bezogen auf den Rotationsmittelpunkt) ergibt sich ein sehr einfach zu lösendes Befestigungsmittel, das je nach Ausführungsform, auch mit einer Vielzahl an Lösewerkzeugen geöffnet werden kann.

Weitere Ausführungsformen der Erfindung ergeben sich aus den Unteransprüchen.

Im Folgenden wird die Erfindung anhand mehrerer Ausführungsbeispiele beschrieben, die durch die beiliegenden Zeichnungen näher erläutert werden. Hierbei zeigen schematisch:
- Figur 1:: eine Detailansicht einer Vibrationswalze;
- Figur 2:: eine Ansicht der Ausführungsform der Kantenrichtvorrichtung;
- Figur 3:: eine Ausführungsform einer Kantenrichtvorrichtung im Querschnitt gemäß der Schnittführung aus Figur 1;
- Figuren 4 und 5:: isometrische Detailansichten zweier weiterer Ausführungsformen von an Vibrationswalzen verbauten Kantenrichtvorrichtungen.

Im Folgenden werden für gleiche und gleich wirkende Bauteile dieselben Bezugsziffern verwendet, wobei bisweilen Hochindizes ihre Anwendung finden.

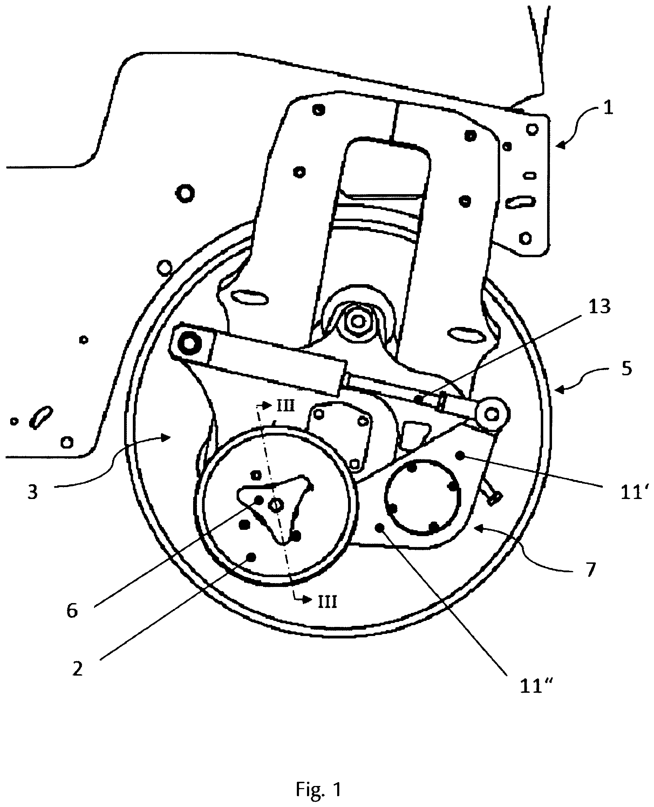

Figur 1 zeigt eine Ausführungsform einer Vibrationswalze 1, bei der im Bereich des Walzenkörpers 5 eine verschwenkbare Kantenrichtvorrichtung 3 angeordnet ist. Beim Verdichten, Glätten oder dergleichen Bearbeiten eines Fahrbahnbelages (nicht dargestellt) durch den Walzenkörper 5 und die jeweils daran befestigte Bandage (nicht dargestellt), resultiert in den Randbereichen des bearbeiteten Fahrbahnstreifens eine unregelmäßige Begrenzungskante, die mittels der Kantenrichtvorrichtung 3 nachbearbeitet werden kann.

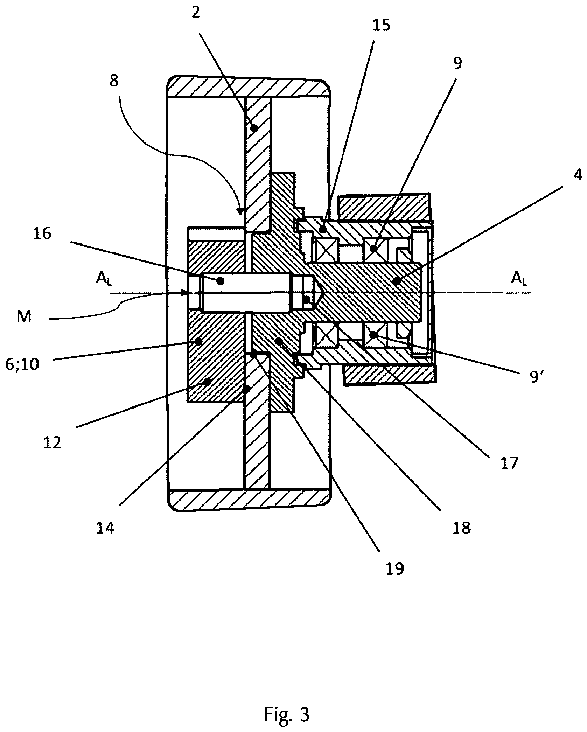

Dazu verfügt die Kantenrichtvorrichtung über ein Richtwerkzeug 2, das an einer frei drehbar gelagerten Lagernabe 4 (Figur 3) in einem Presssitz gelagert ist. Die Befestigung des Richtwerkzeuges 2 erfolgt über ein Befestigungsmittel 6, das bei dieser Ausführungsform in die Lagernabe 4 einschraubbar ist.

Das frei drehbar gelagerte Richtwerkzeug 2 ist an einem Positionierelement 7 gelagert, sodass es mit der zu bearbeitenden Begrenzungskante des Fahrbahnbelages in Wirkeingriff und außer Wirkeingriff bringbar ist. Dazu weist das Positionierelement 7 einen zweischenkligen Schwenkarm 11 auf, der das Absenken und Anheben des Richtwerkzeuges 2 relativ zum Walzenkörper 5 und somit in Richtung der Begrenzungskante und von dieser weg erlaubt. Das Verschwenken des Schwenkarmes 11 erfolgt hier mittels eines Hydraulikzylinders 13, der jeweils an einem Schenkel 11' des Schwenkarms und an einem Fixpunkt der Rotationswalze 1 angelenkt ist. Das Richtwerkzeug 2 ist am zweiten Schenkel 11" des Schwenkarms 11 angeordnet.

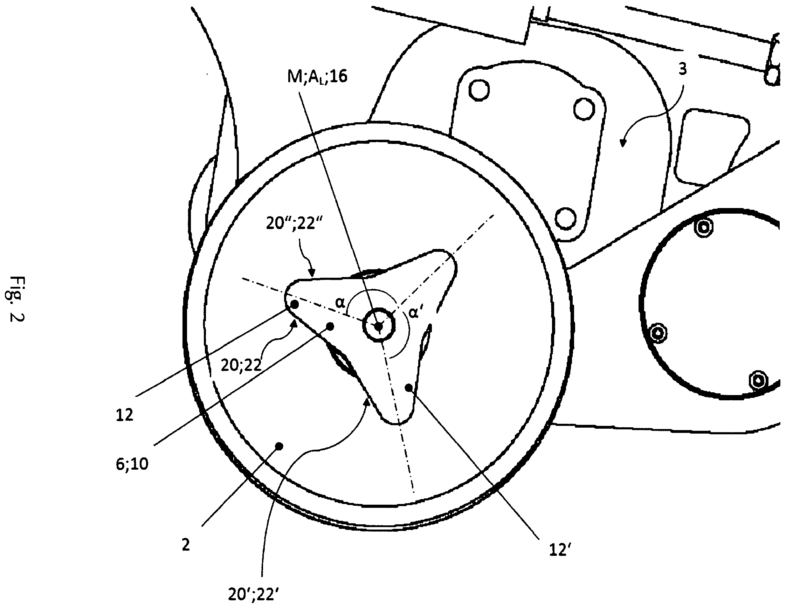

Die Figuren 2 und 3 zeigen die erfindungsgemäße Kantenrichtvorrichtung 2 aus Figur 1 in einer Ansicht (siehe Figur 2) und einem Querschnitt (siehe Figur 3) gemäß der Schnittführung aus Figur 1. Dargestellt ist eine Ausführungsform eines Richtwerkzeuges 2, das über das Befestigungsmittel 6 an der Lagernabe 4 festgelegt ist. Dazu weist das Befestigungsmittel 6 einen Fixierkopf 10 auf, an dem ein Zentralbolzen 16 angeordnet ist, der koaxial zur Hauptachse A_{L} der Lagernabe 4 in eine entsprechende Bohrung einschraubbar ist.

Der Fixierkopf 10 weist seinerseits drei Fixierelemente 12 auf, die im hier dargestellten Befestigungszustand das Richtwerkzeug 2 in einen Presssitz an die Lagernabe 4 drängen. Die Fixierelemente 12 sind dabei sternförmig ausgebildet, wobei die von dem geraden zwischen den Fixierelementen und dem Rotationsmittelpunkt M eingeschlossenen Winkel α im Wesentlichen identisch ausgebildet sind.

Aufgrund der sternförmigen Ausbildung der Fixierelemente 12 bilden die Fixierelemente 12 an ihrer dem Richtwerkzeug 2 zugewandten Oberseite Punktlagerflächen 14 aus, die in ihrer Gesamtheit zu einer äußerst verlässlichen Dreipunktfixierung des Richtwerkzeuges 2 an der Lagernabe 4 führen. Die Punktlagerflächen 14 stehen dabei am Richtwerkzeug an und pressen dieses statisch bestimmt gegen die Lagernabe 4.

Die Lagernabe 4 weist zur radialen Zentrierung des Richtwerkzeuges 2 ein Lagerelement 18 auf, das in Form eines Fortsatzes aus der Lagernabe 4 hervorsteht, und in eine entsprechend kongruent ausgebildete Lageraufnahme 19 eingreift. Über diese Ausführungsform ist zum einen die radiale Zentrierung des Richtwerkzeuges 2 als auch die sichere Krafteinleitung senkrecht zur Hauptachse A_{L} garantiert.

Das Fixiermittel 6 weist an den jeweiligen Fixierelementen 12 Löseelemente 20 auf, die die Krafteinleitung zum Lösen des Fixiermittels, und hier insbesondere zum Ausschrauben des Zentralbolzens 16 aus der Bohrung 17 der Lagernabe 4 (Fig. 3) ermöglichen. Die Löseelemente 20 sind dazu als Schlagflächen 22 ausgebildet, sodass ein Lösen des Befestigungsmittels 6 beispielsweise mit einem herkömmlichen Hammer möglich ist. Da bei dieser Ausführungsform die Löseelemente 20 auf beiden Seiten der in Figur 2 eingezeichneten Verbindungsgeraden zwischen den Fixierelementen 12 und dem Rotationsmittelpunkt M ausgebildet sind, ist neben dem Lösen des Befestigungsmittels 6 auch das Fixieren durch ein Schlagwerkzeug möglich.

Wie insbesondere in Figur 3 dargestellt, ist die Lagernabe 4 über eine Vielzahl an Wälzlagern 9 an einem Richtgehäuse 15 der Kantenrichtvorrichtung 3 angeordnet, sodass sie bei Wirkeingriff mit dem Fahrbahnbelag bzw. dessen Begrenzungskante rotierend der Bewegung der Vibrationswalze 1 folgt. Darüber hinaus garantiert die hier dargestellte Lagerung der Lagernabe 4 eine ausreichende und zuverlässige Krafteinleitung der durch den Hydraulikzylinder 13 eingebrachten Anpresskraft in den Fahrbahnbelag.

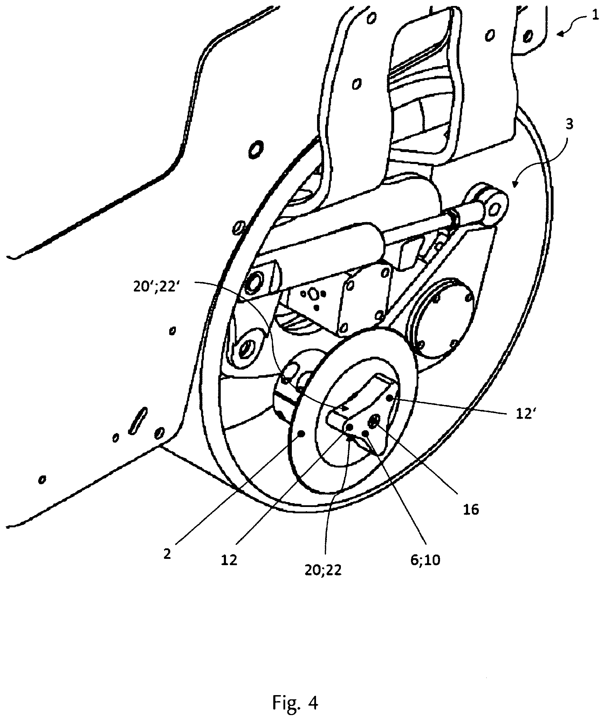

Die Figuren 3 und 4 zeigen zwei weitere Ausführungsformen der erfindungsgemäßen Kantenrichtvorrichtung 3, bei der jeweils wieder über das erfindungsgemäße Befestigungsmittel 6 Richtwerkzeuge 2 befestigt sind. Die hier dargestellten Richtwerkzeuge sind unterschiedlich und an den jeweils vorherrschenden Anwendungsbedarf adaptiert. Identisch ist dagegen wiederum die "dreifingrige" Ausführungsform des Fixierkopfes 10, der wieder als Zentralverschluss mit einem Zentralbolzen 16 und drei sternförmig angeordneten Fixierelementen 12 ausgebildet ist.

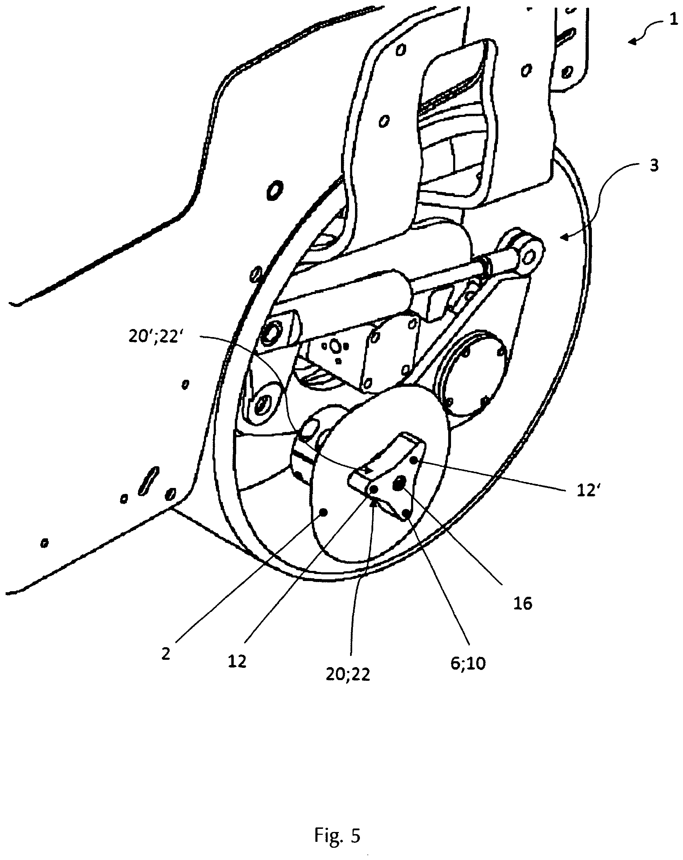

Auch in den Figuren 4 und 5 sind die an den Fixierelementen 12 ausgebildeten Löseelemente 20 bzw. Schlagflächen 22 erkennbar, die bei dieser Ausführungsform ein Lösen bzw. Fixieren des Befestigungsmittels 6 an der Lagernabe 4 erlauben.

## Patentansprüche

1. Kantenrichtvorrichtung, insbesondere für eine Vibrationswalze (1) zum Bearbeiten von bituminösen Fahrbahnen, mit
einem Richtwerkzeug (2), das auf einer frei rotierbaren Lagernabe (4) mittels eines Befestigungsmittels (6) in einem Presssitz (8) befestigbar ist,
**dadurch gekennzeichnet, dass**
das Befestigungsmittel (6) einen Fixierkopf (10) mit drei Fixierelementen (12) aufweist, der derart mit der Lagernabe (4) in Wirkverbindung bringbar ist, dass die drei Fixierelemente (12) das Richtwerkzeug (2) in den Presssitz (8) drängen, wobei die Fixierelemente (12) jeweils eine Punktlagerfläche (14) aufweisen, die im Befestigungszustand am Richtwerkzeug (2) ansteht, und wobei die drei Fixierelemente (12) eine Dreipunktlagerung definieren.

2. Kantenrichtvorrichtung nach Anspruch 1,
**dadurch gekennzeichnet, dass**
die Fixierelemente (12) sternförmig zu einem Rotationsmittelpunkt M des Richtwerkzeuges (4) im Befestigungszustand angeordnet sind.

3. Kantenrichtvorrichtung nach einem der vorhergehenden Ansprüche,
**dadurch gekennzeichnet, dass**
die drei Punktlagerflächen (14) radial beabstandet zu einem Rotationsmittelpunkt M des Richtwerkzeuges (2) im Befestigungszustand angeordnet sind.

4. Kantenrichtvorrichtung nach Anspruch 3,
**dadurch gekennzeichnet, dass**
die drei Radialabstände der Punktlagerflächen (14) zum Rotationsmittelpunkt M identisch ausgebildet sind.

5. Kantenrichtvorrichtung nach einem der Ansprüche 2 bis 4,
**dadurch gekennzeichnet, dass**
sich die Punktlagerflächen (14) mit zunehmendem Abstand zum Rotationsmittelpunkt M des Richtwerkzeuges (2) im Befestigungszustand verkleinern.

6. Kantenrichtvorrichtung nach einem der vorhergehenden Ansprüche,
**dadurch gekennzeichnet, dass**
der Fixierkopf (10) einen Zentralbolzen (16) aufweist, der unter Durchdringung des Richtwerkzeuges (2) an der Lagernabe (4) befestigbar ist.

7. Kantenrichtvorrichtung nach Anspruch 6,
**dadurch gekennzeichnet, dass**
der Zentralbolzen (16) in die Lagernabe (4) einschraubbar oder dergleichen befestigbar ist.

8. Kantenrichtvorrichtung nach einem der Ansprüche 6 oder 7,
**dadurch gekennzeichnet, dass**
der Zentralbolzen (16) koaxial zur Hauptachse A_{L} der Lagernabe (4) in diese einschraubbar oder dergleichen befestigbar ist.

9. Kantenrichtvorrichtung nach einem der vorhergehenden Ansprüche,
**dadurch gekennzeichnet, dass**
die Lagernabe (4) ein Lagerelement (18) zur radialen Zentrierung des Richtwerkzeuges (2) im Befestigungszustand aufweist.

10. Kantenrichtvorrichtung nach einem der vorhergehenden Ansprüche,
**dadurch gekennzeichnet, dass**
das Befestigungsmittel (6) wenigstens ein Löseelement (20) aufweist, um auf das Befestigungsmittel (6) eine Lösekraft aufzubringen, über die die Befestigung des Richtwerkzeuges (2) im Presssitz (8) lösbar ist.

11. Kantenrichtvorrichtung nach Anspruch 10,
**dadurch gekennzeichnet, dass**
das Löseelement (20) eine Schlagfläche (22) aufweist, auf die die Lösekraft mittels eines Schlagwerkzeuges aufbringbar ist.

12. Kantenrichtvorrichtung nach einem der Ansprüche 10 oder 11,
**dadurch gekennzeichnet, dass**
das Löseelement (20) am Fixierelement (12) angeordnet ist.

13. Kantenrichtvorrichtung nach einem der Ansprüche 10 bis 12,
**dadurch gekennzeichnet, dass**
das Löseelement (20) über ein Hebelelement am Befestigungsmittel (6) angeordnet und vom Rotationsmittelpunkt M der Lagernabe (4) weiter beabstandet ist als die Fixierelemente (12).

14. Befestigungsmittel (6) für ein Richtwerkzeug (2) einer Kantenrichtvorrichtung (3), insbesondere einer Vibrationswalze (1) zum Bearbeiten von bituminösen Fahrbahnen, das auf einer frei rotierbaren Lagernabe (4) in einem Presssitz (8) befestigbar ist,
**dadurch gekennzeichnet, dass**
das Befestigungsmittel (6) einen Fixierkopf (10) mit drei Fixierelementen (12) aufweist, der derart mit der Lagernabe (4) in Wirkverbindung bringbar ist, dass die drei Fixierelemente (12) das Richtwerkzeug (2) in den Presssitz (8) drängen, wobei die Fixierelemente (12) jeweils eine Punktlagerfläche (14) aufweisen, die im Befestigungszustand am Richtwerkzeug (2) ansteht, und wobei die drei Fixierelemente (12) eine Dreipunktlagerung definieren.

## Claims

1. An edge alignment device, in particular for a vibration roller (1), for treating bituminous roadways, comprising
an alignment tool (2) which can be fastened on a freely rotatable bearing hub (4) in a press fit (8) by means of a fastener (6),
**characterized in that**
the fastener (6) comprises a fixing head (10) with three fixing elements (12), which fixing head can be operatively connected to the bearing hub (4) in such a way that the three fixing elements (12) press the alignment tool (2) into the press fit (8), wherein the fixing elements (12) each comprise a point bearing surface (14), which, in the fastened state, bears against the alignment tool (2), and wherein the three fixing elements (12) define a three-point bearing.

2. The edge alignment device according to claim 1,
**characterized in that**
the fixing elements (12) are arranged in a star-shaped manner relative to a rotational center M of the alignment tool (4) in the fastened state.

3. The edge alignment device according to any one of the preceding claims,
**characterized in that**
the three-point bearing surfaces (14) are radially spaced apart from a rotational center M of the alignment tool (2) in the fastened state.

4. The edge alignment device according to claim 3,
**characterized in that**
the three radial distances of the point bearing surfaces (14) from the rotational center M are configured identically.

5. The edge alignment device according to any one of claims 2 to 4,
**characterized in that**
the point bearing surfaces (14) become smaller with increasing distance from the rotational center M of the alignment tool (2) in the fastened state.

6. The edge alignment device according to any one of the preceding claims,
**characterized in that**
the fixing head (10) comprises a central bolt (16), which can be fastened to the bearing hub (4) while penetrating the alignment tool (2).

7. The edge alignment device according to claim 6,
**characterized in that**
the central bolt (16) can be screwed into, or in a similar manner be fastened to, the bearing hub (4).

8. The edge alignment device according to any one of claims 6 or 7,
**characterized in that**
the central bolt (16) can be screwed into, or in a similar manner be fastened to, the bearing hub (4) coaxially to the main axis A_{L} of the bearing hub (4).

9. Edge alignment device according to any one of the preceding claims,
**characterized in that**
the bearing hub (4) comprises a bearing element (18) for radially centering the alignment tool (2) in the fastened state.

10. The edge alignment device according to any one of the preceding claims,
**characterized in that**
the fastener (6) comprises at least one release element (20) to apply a release force on the fastener (6), via which the fastening of the alignment tool (2) in the press fit (8) can be released.

11. The edge alignment device according to claim 10,
**characterized in that**
the release element (20) comprises a striking surface (22) onto which the release force can be applied by means of a striking tool.

12. The edge alignment device according to any one of claims 10 or 11,
**characterized in that**
the release element (20) is arranged on the fixing element (12).

13. The edge alignment device according to any one of claims 10 to 12,
**characterized in that**
the release element (20) is arranged on the fastener (6) via a lever element, and is spaced further apart from the rotational center M of the bearing hub (4) than the fixing elements (12).

14. A fastener (6) for an alignment tool (2) of an edge alignment device (3), in particular of a vibration roller (1) for treating bituminous roadways, which can be fastened on a freely rotatable bearing hub (4) in a press fit (8),
**characterized in that**
the fastener (6) comprises a fixing head (10) with three fixing elements (12), which fixing head can be operatively connected to the bearing hub (4) in such a way that the three fixing elements (12) press the alignment tool (2) into the press fit (8), wherein the fixing elements (12) each comprise a point bearing surface (14), which, in the fastened state, bears against the alignment tool (2), and wherein the three fixing elements (12) define a three-point bearing.

## Revendications

1. Dispositif de dressage de bords, en particulier pour un rouleau vibrant (1), destiné au traitement de routes en bitume, comprenant:
un outil de dressage (2) qui peut être fixé sur un moyeu de palier librement rotatif (4) avec un ajustement serré (8) au moyen d'un dispositif de fixation (6),
***caractérisé en ce que***
le dispositif de fixation (6) comprend une tête de fixation (10) avec trois éléments de fixation (12), ladite tête de fixation pouvant être reliée opérationnellement au moyeu (4) de palier d'une manière telle que les trois éléments de fixation (12) pressent l'outil de dressage (2) en ajustement serré (8), les éléments de fixation (12) comprenant chacun une surface d'appui ponctuel (14) qui, à l'état serré, s'appuie sur l'outil de dressage (2), et les trois éléments de fixation (12) définissant un palier à trois points.

2. Dispositif de dressage de bords selon la revendication 1,
***caractérisé en ce que***
les éléments de fixation (12) sont disposés en étoile par rapport à un centre de rotation M de l'outil de dressage (4) à l'état fixé.

3. Dispositif de dressage de bords selon l'une quelconque des revendications précédentes,
***caractérisé en ce que***
les trois surfaces d'appui ponctuel (14) sont espacées radialement d'un centre de rotation M de l'outil de dressage (2) à l'état fixé.

4. Dispositif de dressage de bords selon la revendication 3,
***caractérisé en ce que***
les trois distances radiales des surfaces d'appui ponctuel (14) depuis le centre de rotation M sont configurées de manière identique.

5. Dispositif de dressage de bords selon l'une quelconque des revendications 2 à 4,
***caractérisé en ce que***
les surfaces d'appui ponctuel (14) diminuent avec la distance croissante du centre de rotation M de l'outil de dressage (2) à l'état fixé.

6. Dispositif de dressage de bords selon l'une quelconque des revendications précédentes,
***caractérisé en ce que***
la tête de fixation (10) comprend un boulon central (16) qui peut être vissé au moyeu (4) de palier en pénétrant l'outil de dressage (2).

7. Dispositif de dressage de bords selon la revendication 6,
***caractérisé en ce que***
le boulon central (16) peut être vissé, ou assujetti d'une manière semblable, dans le moyeu (4) de palier.

8. Dispositif de dressage de bords selon l'une quelconque des revendications 6 ou 7,
***caractérisé en ce que***
le boulon central (16) peut être vissé, ou assujetti d'une manière semblable, dans le moyeu (4) de palier de manière coaxiale à l'axe principal A_{L} du moyeu (4) de palier.

9. Dispositif de dressage de bords selon l'une quelconque des revendications précédentes,
***caractérisé en ce que***
le moyeu (4) de palier comprend un élément (18) de palier pour centrer radialement l'outil de dressage (2) à l'état fixé.

10. Dispositif de dressage de bords selon l'une quelconque des revendications précédentes,
***caractérisé en ce que***
le dispositif de fixation (6) comprend au moins un élément de libération (20) destiné à appliquer une force de libération sur le dispositif de fixation (6), par l'intermédiaire duquel la fixation de l'outil de dressage (2) en ajustement serré (8) peut être libérée.

11. Dispositif de dressage de bords selon la revendication 10,
***caractérisé en ce que***
l'élément de libération (20) comprend une surface de percussion (22) sur laquelle peut être appliquée la force de libération au moyen d'un outil de percussion.

12. Dispositif de dressage de bords selon l'une quelconque des revendications 10 ou 11,
***caractérisé en ce que***
l'élément de libération (20) est monté sur l'élément de fixation (12).

13. Dispositif de dressage de bords selon l'une quelconque des revendications 10 à 12,
***caractérisé en ce que***
l'élément de libération (20) est monté sur le dispositif de fixation (6) par l'intermédiaire d'un élément de levier, et est plus éloigné du centre de rotation M du moyeu (4) de palier que les éléments de fixation (12).

14. Dispositif de fixation (6) pour un outil de dressage (2) d'un dispositif (3) de dressage de bords, en particulier d'un rouleau vibrant (1) destiné au traitement de routes en bitume, qui peut être fixé sur un moyeu de palier librement rotatif (4) avec un ajustement serré (8),
***caractérisé en ce que***
le dispositif de fixation (6) comprend une tête de fixation (10) avec trois éléments de fixation (12), ladite tête de fixation pouvant être reliée opérationnellement au moyeu (4) de palier d'une manière telle que les trois éléments de fixation (12) pressent l'outil de dressage (2) en ajustement serré (8), les éléments de fixation (12) comprenant chacun une surface d'appui ponctuel (14) qui, à l'état serré, s'appuie sur l'outil de dressage (2), et les trois éléments de fixation (12) définissant un palier à trois points.
